# EUROPEAN PATENT APPLICATION

(11) **EP 4 525 355 A1**
(43) Date of publication of application: **19.03.2025**
(21) Application number: 23197993.1
(22) Date of filing: 18.09.2023
(51) Int. Cl.: H04L 9/32

(54) **SIGNING SYSTEM AND METHOD FOR GENERATING STATEFUL HASH-BASED SIGNATURES**

(71) Applicant: Siemens Aktiengesellschaft, 80333 München (DE)
(72) Inventor: De Santis, Fabrizio, 80634 München (DE); Vaira, Antonio, 81379 München (DE)
(74) Representative: Siemens Patent Attorneys

(57) **Abstract**

Signing system (10), comprising
- a signing device (12) comprising a stateful hash-based signature unit (18) for generating a post-quantum proved stateful hash-based signature (HBsig) depending on a unique one-time state, that is renewed after every signature,
- a state provider device (11) which is configured to provide the unique one-time state to the signing device (12), and wherein the state provider device (11) is located externally from the signing device (12), and wherein the state provider device (11) is operated independently of an operator of the signing device (12).

## Description

The present disclosure relates to a signing system and a method for generating a post-quantum proved stateful hash-based signature.

Nowadays, internet of things (IoT) devices are increasingly applied in private and industrial environments. IoT devices communicate with each other or with controllers in public or private communication networks. Public-key cryptography is used to secure authenticity of communication partners and integrity of the exchanged data. Digital signatures are applied in device certificate to provide counterfeit protection. Therefore, the digital signatures need to provide protection over the whole lifetime of the device, which can extend up to 10 to 20 years in industrial environments. Respectively public-key cryptography schemes are required, which are still secure in 10 or 20 years.

Public-key cryptography refers to cryptosystems which employ key-pairs instead of individual secret keys. A key pair consist of a private key, which is only known to its owner, and a public key, which can be distributed publicly to anybody without compromising the security of the cryptosystem. Digital signatures are an example of public-key cryptography, in which a message is signed using the sender's private key and can be verified by anyone having access to the corresponding sender's public key. Two widely employed approaches to public-key cryptography are RSA (Rivest-Shamir-Adleman) and elliptic-curve cryptography. These cryptosystems are based on the RSA problem and the elliptic-curve discrete logarithm problem, respectively. So far, no efficient methods are known to solve such problems using current computing technologies. This means that for sufficiently large numbers the task of solving such problems is believed to be impossible with conventional computers. However, efficient quantum algorithms, e.g., Shor's algorithm, are known to solve such problems with the aid of quantum computers. This means that as soon as powerful enough quantum computers will be built in the future, the security of RSA and elliptic-curve cryptographic systems will become at risk of compromise and should be replaced by algorithms which are also resistant against quantum attacks.

Post-quantum cryptography pertains to a category of public-key cryptographic algorithms that lack efficient quantum and non-quantum algorithms to solve their underlying mathematical problems. Stateful hash-based signature (sHBS) algorithms are one approach to realize post-quantum digital signatures. For instance, extended Merkle Signature Scheme (XMSS) is a stateful hash-based signature algorithm that builds upon Winternitz One-Time Signatures+ (WOTS+) and Merkle trees. Unlike traditional digital signature schemes like DSA or ECDSA, XMSS is a stateful algorithm, requiring maintenance and updates of an internal state after every signature to ensure the correct functioning and security of the digital signature system. The state management guarantees that no WOTS+ secret key is used more than once, as reusing the same WOTS+ secret key poses a security threat.

Currently, a signer is responsible for managing the internal state, issuing signatures with a WOTS+ key and updating the internal state to the next WOTS+ secret key. If the signer fails to update its internal state correctly, it can result in the issuance of a signature reusing a previous WOTS+ key, leading to a security breach. Nowadays, an organization that operates a sHBS Certificate Authority, or a sHBS signing service, must provide adequate proof that the state of the sHBS private key is handled according to a security level that is acceptable for the relying party which validates, hence will trust, the signature.

The proof may be technically provided by implementing a monotonic counter in the Hardware Security Module (HSM) that hold the private keys. The counter may be periodically audited by an independent auditor at given time intervals, but this procedure does not prevent tampering, for example from a trusted operator of the HSM by mistake or due to malicious behavior in between audit intervals.

Therefore, it is the object of the present application to provide a signing system that enables transparency and trust to the provision of one-time states and stateful hash-based signatures, respectively.

This object is solved by the features of the independent claims. The dependent claims contain further developments of the invention.

A first aspect concerns a signing system comprising a signing device comprising a stateful hash-based signature unit for generating a post-quantum proved stateful hash-based signature depending on the unique one-time state, that has to be renewed after every signature, and a state provider device which is configured to (manage and) provide a unique one-time state to the signing device. The state provider device is located externally from the signing device, and the state provider device is operated independently of an operator of the signing device.

Such, the state provider device can be used by the signing device, e.g., the hardware secure module or a signing service or a Certification Authority and allows to keep an external track on which private key state was already used. Providing by the state provider device the one-time state to the signing unit removes the requirement of implementing a secure state keeping technology within the signing unit, e.g., the HSM. Further on, the signing system provides the infrastructure to sign generic content.

In a further embodiment of the signing system, the stateful hash-based signature unit is configured to generate the stateful hash-based signature according to a generic stateful Hash-Based Signature (sHBS) scheme or a stateful signature algorithm according to an extended Merkle Signature Scheme (XMSS), an multi-tree version of the extended Merkle Signature Scheme (XMSS^MT), Leighton-Micali Signature (LMS) scheme, an Hierarchical Signature System (HSS) and a Pyramid stateful hash-based Signature Scheme.

Hence, the signing system is able to provide signatures according to the most commonly known stateful hash-based signature algorithms.

In a further embodiment the state provider device is configured to provide audit information about the provided one-time states at regular cycle times.

This enables a regular monitoring of the state provider device.

In a further embodiment the state provider device is configured to receive a request message for providing a unique one-time state from the signing device, and to send in return a response message comprising the unique one-time state and a secure digital signature of the one-time status to the signing device.

The secure digital signature of the one-time state enables integrity protection of the sent one-time state during the transfer of the response message.

In a further embodiment the state provider device is configured to use a first digital signature algorithm for establishing the secure digital signature, wherein the first digital signature algorithm is secure over at least two further audit cycle times starting from time of generating the secure digital signature.

In other words, the applied digital signature algorithms can comply to the state of the art at the time the one-time state is sent. The digital signature algorithm does not require to be secure over the same long time as the stateful hash-based signature itself. This reduces the processing effort for generating this digital signature.

In a further embodiment the state provider device is configured to receive a request message for providing a unique one-time status from the signing device, and to send in return a response message comprising the unique one-time status, wherein the request message and response message are sent using an indirect authentication mechanism that is built with first key encapsulation method (KEM) primitives.

This embodiment has the advantage that neither the state provider device nor the signing device must support a digital signature scheme for the purpose sHBS state provision but only provide Key Encapsulation Method primitives which are typically faster.

In a further embodiment the state provider device is configured to receive a request message for providing a unique one-time state from the signing device, and to send in return a response message comprising the unique one-time state and a hash-based message authentication code HMAC of the response message to the signing device.

This provides the advantage that no party must support a digital signature scheme for purpose sHBS private key index provisioning, i.e., for providing the one-time state, but only provision of hash-based message authentication code for the transferred message which is typically faster.

In a further embodiment the state provider device and the signing device are configured to establish a secure communication connection for transferring the request message and the response message, wherein the secure communication is established comprising a mutual authentication of the signing device and the state provider device.

This embodiment reduces attacks of a third party pretending to be the signing device or the state provider device. This provides means to fulfil high requirements concerning the authenticity of the state provider device and signing device communicating with each other.

In a further embodiment the signing device and the state provider device are configured to use a second Key Encapsulation mechanism for establishing the secure communication connection.

This embodiment has the advantage that no party must support a digital signature scheme for the purpose of one-time state provision, i.e., sHBS private key index provisioning, but only on KEMs which are typically faster.

In a further embodiment the signing device is configured to send a nonce with the request message for providing a unique one-time state to the state provider device and the state provider device generates the unique one-time state depending on the nonce.

This provides the advantage that the one-time state generation depends on the randomness of both the signing device and the state provider device, and the uniqueness of the one-time state is improved reducing, e.g., replay attacks.

In a further embodiment the state provider device comprises a certificate of the manufacturer of the state provider device, and the state provider device is configured to apply the certificate of the manufacturer to sign the unique one-time state sent in the response message to the signing device.

A second aspect concerns a computer-implemented method for operating a signing system comprising a signing device and a state provider device, in particular configured as described above, comprising the method steps of
- providing the unique one-time state from the state provider device to the signing device,
- generating, by the signing device, a post-quantum proved stateful hash-based signature depending on the unique one-time state, that has to be renewed after every signature, wherein the state provider device is located externally from the signing device, and wherein the state provider device is operated independently of an operator of the signing device.

In an embodiment of the method the generated stateful hash-based signature is applied to sign a certificate issued by a certification authority and/or to sign a firmware issued by a firmware provider.

A signing service like a Certification Authority which issues certificates with a stateful hash-based signature are suited to issue certificates to IoT devices, which are operated over a time period of 10 to 20 years, as the stateful hash-based signature is secure even for quantum computer.

In an embodiment the signing device is registered at the state provider device before the state provider device provides the unique one-time state to the signing device.

This reduces e.g., man-in-the-middle attacks.

A third aspect concerns a computer program product directly loadable into the internal memory of at least two digital computers, comprising software code portions for performing the steps as described before, when said product is run on said digital computers.

The invention will be explained in more detail by reference to accompanying figures. Similar objects will be marked by the same reference signs.
- Figure 1: schematically illustrates a signature scheme of a stateful hash-based digital cryptography.
- Figure 2: schematically illustrates an embodiment of the inventive signing system.
- Figure 3: shows an embodiment of the inventive method by a flow diagram.
- Figure 4: schematically illustrates an application scenario of a signing system in a signing service of a certification authority.

It is noted that in the following detailed description of embodiments, the accompanying drawings are only schematic, and the illustrated elements are not necessarily shown to scale. Rather, the drawings are intended to illustrate functions and the co-operation of components. Here, it is to be understood that any connection or coupling of functional blocks, devices, components or other physical or functional elements could also be implemented by an indirect connection or coupling, e.g., via one or more intermediate elements. A connection or a coupling of elements or components or nodes can for example be implemented by a wire-based, a wireless connection and/or a combination of a wire-based and a wireless connection.

Functional units can be implemented by dedicated hardware, e.g., processor, by firmware or by software, and/or by a combination of dedicated hardware and firmware and software. It is further noted that each functional unit described for an apparatus can perform a functional step of the related method and vice versa.

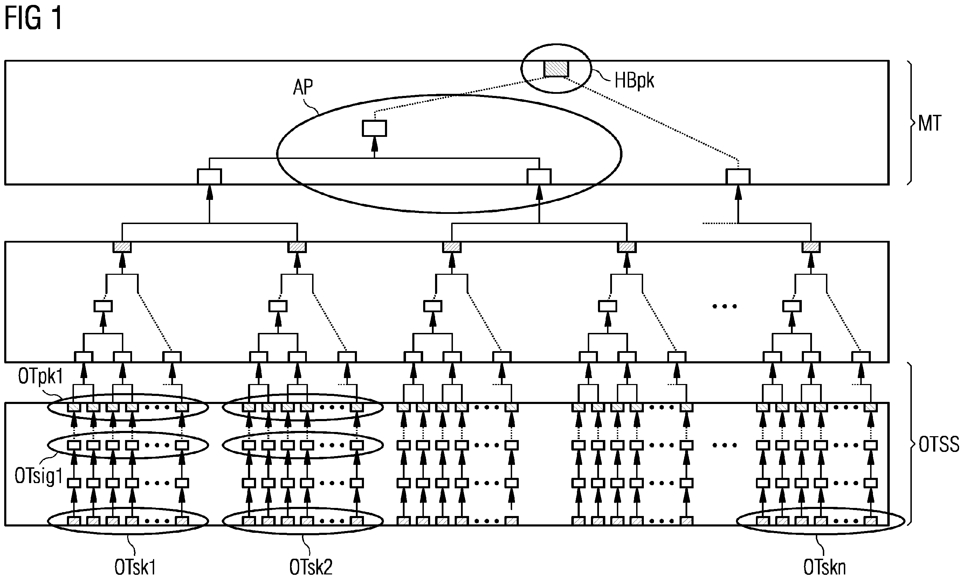

Figure 1 shows a structure of a stateful hash-based cryptography function, i.e., a stateful hash-based signature scheme. Hash-based signature schemes combine a one-time signature scheme OTSS with a Merkle tree structure MT. Since a one-time signature scheme key can only securely sign a single data structure to be signed, i.e., a message, it is practical to combine many such keys within a single, larger structure. A Merkle tree structure MT is used to this end. In this hierarchical data structure, a hash function and concatenation are used repeatedly to compute tree nodes.

Hash-based signature schemes are stateful, meaning that signing requires updating the private key, unlike conventional digital signature schemes. For stateful hash-based signature schemes, signing requires keeping state of the used one-time keys and making sure they are never reused. In this way a one-time private key OTsk is uniquely used to generate a one-time signature OTsig, the one-time signature OTsig is uniquely tied to a one-time public key OTpk. A hash-based public key HBpk is determined based on all one-time signature schemes and builds the root of the Merkle tree. The hash-based public key HBpk is published to verify all hash-based digital signatures generated based on one of the one-time private keys OTsk.

As an example, according to the extended Merkle Signature Scheme XMSS described in the RFC 8391, Winternitz One-Time Signature Plus (WOTS+) private keys are generated using a secret seed value and an index value. The index value is updated for every hash-based signature such that only unique WOTS+ private keys are generated. To guarantee the security of the XMSS cryptosystem, a XMSS signer generating the XMSS signature must guarantee that the index value is never used more than once. This can be achieved using a secure monotone counter, which can be neither decreased nor reset. This is typically a very strong requirement which could be even circumvented in some cases, e.g., by modifying the counter during the signature computation after the counter has been securely loaded from memory. There is no way for the XMSS verifier to check if the XMSS signer is behaving correctly.

A signing system is proposed comprising a signing device and a state provider device, that keeps track of the state of one or more private keys associated to a stateful hash-based signature service or a Certification Authority of a Private Key Infrastructure. The signing device, e.g., a Hardware Security Module, associated with a signature service or certification authority, will contact the state provider device to request which private key index, synonymously known as private key state or one-time state, to use to issue a signature. The state provider device will return the one-time state to be used, preferably together with a digital signature to provide further assurance that the one-time state was provided by a trustworthy source. The signing service or CA can include the signature in its response to a client to further increase the trustworthiness level of the entire process.

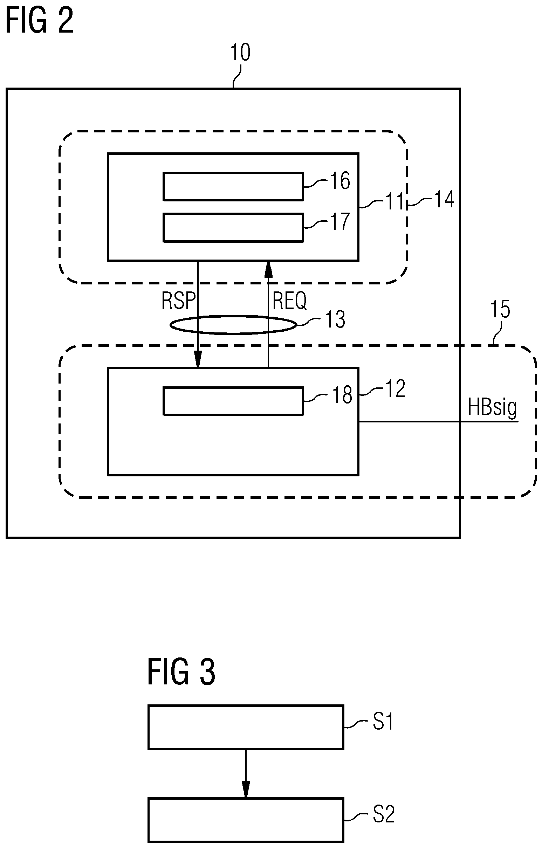

Figure 2 shows a signing system 10 comprising a state provider device 11 and a signing device 12. The state provider device 11 and a signing device 12 are communicatively connected by a secure communication connection 13. The signing device 12 comprises a stateful hash-base signature unit 18 which is configured to generate a post-quantum proved hash-based digital signatures HBsig which depends on a unique one-time state that has to be renewed after every signature. Optionally the signing system can comprise one state provider device 11 which is communicatively connected to more than one signing devices 12. In this case the state provider device 11 can keep track of the state of the private key of several signing devices and, each time a new one-time state is queried by the respective signing device, return the next one-time state to use to compute the signature.

The state provider device 11 is configured to provide the unique one-time state to the signing device 12. The state provider device 11 is configured to provide audit information about the provided one-time states on regular cycle times. Therefore, the state provider device 11 comprises a one-time state generator 16, e.g., implemented by a secure monotonic not-resettable counter that cannot be decreased or reset. Further the state provider device 11 comprises an audit unit 17 which provides audit information about the provided one-time states on regular cycle times. The audit unit 17 stores log data about each request messages which were received and the one-time state or the response message RSP which was sent in returned to the request message. The audit unit 17 may store further data, e.g., the time of the last retrieval of audit data, information and time of the last maintenance of the state provider unit, and the like.

The state provider device 11 is located externally from the signing device 12. The state provider device 11 is operated and managed in a first domain 14. The signing device 12 is located and operated in a second domain 15, which is operated independently of the first domain 14. For instance, the first domain 14 is operated by a trustful 3^{rd} party organization which provides publicly available audit information. Preferably, audit information is collected and checked at regular cycle times or on demand or on any predetermined times. Warning messages are provided to the signing device 12 or the operator of the second domain in case of a detected preach of the state provided device 11, especially if the same unique one-time state was provided more than one time to the signing device 12.

The stateful hash-based signature unit 18 is configured to generate the stateful hash-based signature according to a generic stateful Hash-Based Signature (sHBS) scheme or a stateful signature algorithm according to extended Merkle Signature Scheme XMSS, a multi-tree version of the extended Merkle Signature Scheme XMSS^MT, Leighton-Micali Signature LMS scheme, a Hierarchical Signature System HSS and a Pyramid stateful hash-based Signature Scheme.

The state provider device 11 is configured to receive a request message REQfor providing a unique one-time state from the signing device 12. In return the state provider device 11 sends a response message comprising the requested unique one-time state and a secure digital signature of the one-time state to the signing device. The state provider device 12 and the signing unit 11 are configured to use a first digital signature algorithm for establishing the secure digital signature. The first digital signature algorithm is secure over at least two further audit cycle times starting from time of generating the secure digital signature. Any digital signature algorithm which deemed secure for an adequate time interval can be used as first digital signature algorithm. For instance, the first digital signature should be secure over few auditing cycles of the state provider, e.g., a typical value would span between three to five years.

As an alternative, the signature of the one-time state included by the state provider device 11 in its response message can be replaced by an indirect authentication mechanism that is built with key encapsulation method KEM primitives. E.g., the signing device 12 encrypts its request message REQ using an encryption public key of the state provider device 11. The state provider device 11 in turn decrypts the request message REQ using its encryption private key. The state provider device 11 encrypts the response message using the encryption public key of the signing device 12.

In an embodiment the state provider unit 11 is equipped with a manufacturer certificate, e.g., a certificate according to X.509-standard, which is issued by a trustworthy certification authority controlled by a manufacturer of the state provider unit 11. The state provider unit 11 can use this manufacturer certificate to sign the one-time state provided in the response message. The certificate authority adds the signature of the state provider device, together with its manufacturer certificate in an extension of the X.509 certificate to increase the trustworthiness of the issued X.509 certificates.

The certificate of the manufacturer of the state provider device 11 can be forwarded by the signing device 12 to components of a signing service which requested to sign data from the signing device 12. The component of the signing service can add the certificate of the manufacturer of the state provider device 11 to increase the trustworthiness of the signed data. Preferably, the signing service and the component of the signing service are located in the second domain and are operated by the operator of the signing device.

In an embodiment, the state provider device 11 is configured to send in the response message the unique one-time state and a hash-based message authentication code HMAC of the response message to the signing device 12.

The state provider device 11 and the signing device establish the secure communication connection 13 for transferring the request message REQ and the response message between each other. The secure communication connection 13 is established comprising an authentication of the signing device 12 and the state provider device 11, preferably a mutual authentication. Preferably, all further secure connections established by components of the signing service must also guarantee (mutual) authentication of the components. This is required since the information exchanged can be generally considered public therefore reducing requirements towards long term confidentiality. The authentication can be achieved by means of applying an authentication scheme based, for example, on digital signature primitives that are deemed secure at the time of the connection establishment.

In an embodiment the signing device 12 and the state provider device 11are configured to use a second Key Encapsulation mechanism for establishing the secure communication connection 13. In the signing service all secure connections may be established by relying on Key Encapsulation Mechanisms (KEM), instead of digital signature primitives, e.g., by relying on KEMTLS. Both parties, i.e., state provider device 11 and signing device 12 must be pre-provisioned with credentials that support this indirect authentication mechanism, e.g., KEM X.509 certificates. This embodiment has the advantage that no party must support a digital signature scheme for the purpose sHBS private key index provisioning but only on KEMs which are typically faster.

Further on, the signing device 12 is configured to send a nonce with the request message REQ for providing a unique one-time state to the state provider device 11. The state provider device 11 generates the unique one-time state depending on this nonce. Optionally, the request message REQ includes beside the nonce also a signature of the nonce. After successful verification of the signature of the nonce in the state provider device 11, the nonce will be used to contribute to the generation of the one-time state, i.e., to the generation of aa fresh sHBS private key, which will be sent back to the signing device 12. Thus, the one-time state generation depends on the randomness of both the signing device 12, which provides the nonce, and the one-time state generator 16 of the state provider device 11.

Fig. 3 shows a flow diagram of an embodiment of a method for operating a signing system comprising a state provider device and a signing device as described above. The method is exemplarily described with reference to the signing system 10 shown in Fig. 2. The method concerns a generation of a post-quantum proved stateful hash-based signature.

In a first step S1 of the method a unique one-time state is provided from the state provider device 11 to the signing device 12. In a second step S2 a post-quantum proved stateful hash-based signature is generated depending on a unique one-time state by the signing device 12. The state provider device 11 is located externally from the signing device 12. The state provider device 11 is operated independently of an operator of the signing device 12. The unique one-time state has to be renewed after every signature.

Preferably, the signing device 12 is registered at the state provider device 11 before the state provider device 11 provides the unique one-time state to the signing device 12. The state provider will deliver one-time states and store one-time states only for signing devices 12 that are pre-registered at the state provider device 11. After registration the signing device 12 requests a new unique one-time state by sending a request message REQ via a secure communication connection 13 to the state provider device 11.

The generated stateful hash-based signature can be applied to sign any kind of data but is preferably applied to sign a certificate issued by a certification authority and/or to sign a firmware issued by a firmware provider.

The method steps are performed by at least two digital computers when a computer program product comprising software code portions for performing the steps, are loaded into an internal memory of the at least two digital computers and said product is run on said digital computers.

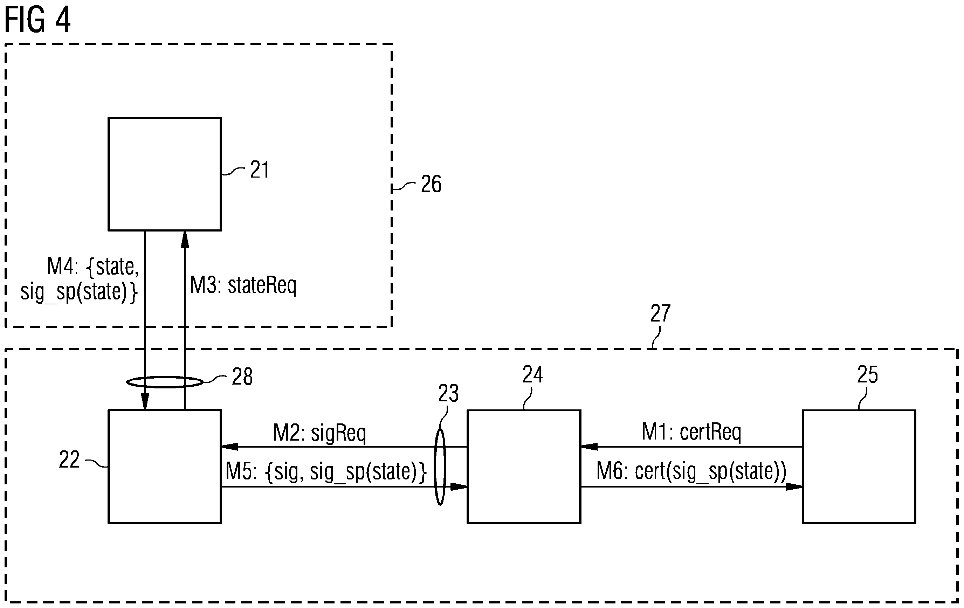

Fig. 4 shows an application scenario of a signing system in a signing service of a certification authority 24 issuing digital certificates, especially digital certificates according to X.509 standard.

An organization that operates the certification authority 24 providing quantum-proved stateful hash-based signatures sHBS, or any other sHBS signing service, must provide adequate proof that the state of the sHBS private key is handled according to a security level that is acceptable for the relying party which validates, hence will trust, the signature. The proof may be technically provided by implementing a monotonic counter in a Hardware Security Module (HSM) that hold the private keys. The counter may be periodically audited by an independent auditor at given time intervals, but this procedure does not prevent tampering, for example from a trusted operator by mistake or due to malicious behavior in between audit intervals.

The proposed signing system enables providing enhanced trust in the signing service, here in the issued stateful hash-based signed certificates, in that the signing system comprises two distinct devices, i.e., state provider device 21 and signing device 22 which are located separate from each other. The state provider device 21 is operated in a first domain 26, which is independent of a second domain 27 comprising components of the signing service including the signing device 22 of the signing system. A main function of the signing system and especially of the state provider device 21 is dedicated to keep track of the private key state on behalf of the certificate authority 24.

The interaction of the signing system and components of the signing service of issuing certificates by certification authority 24 is described with reference to Fig.4.

Components of the signing service are operated in the second domain 27 and comprise the signing device 21 the certificate authority 24 and a client 25.

At first, the client submits a request message, see M1: {cer-tReq}, to the certificate authority 24 using a secure enrolment protocol. The certificate authority 24, upon approving the request, creates a content to-be-signed and submits a signature request message, see M2: {sigReq}, to the signing device 22 over a first communication connection 28. The signing device 22 submits a state request message, see M3: {stateReq}, to the state provider device 21 over a second secure connection 28 requesting a fresh private key index, i.e., a new unique one-time state, to use for the signature.

The state provider unit 21 selects a fresh one-time state, to be used by the signing device 22. The state provider unit 21 returns the one-time state together with a secure digital signature of the one-time state to the state provider device 21, over the second secure connection 28, see M4: {state, sig_sp(state)}.

The signing device 22 uses the one-time state returned by the state provider unit 21 to update its internal state counter and to calculate the stateful hash-based signature and returns the signature to the certificate authority 24, together with the state provider signature, see M5: {sig, sig_sp(state)}. The certificate authority 24 builds the X.509 certificate and optionally includes the signature of the state provider device 21 in an extension of the X.509 certificate, see M6: cert(sig_sp(state)).

The signature of the one-time state output by the state provider device 21 is created using any digital signature algorithm. The signature of the one-time state should be secure over few auditing cycles of the state provider device 21, e.g., a typical value would span between three to five years. The signature included by the state provider device 21 in its response, see M4, can be replaced by an indirect authentication mechanism that is built with Key Encapsulation method primitives, e.g., the signing device 22 encrypts its request using the encryption public key of the state provider 21 which in turn decrypts it using its encryption private key and encrypt its response using the encryption public key of the signing device 22. Both parties must be pre-provisioned with credentials that support this indirect authentication mechanism, e.g., KEM X.509 certificates.

The first communication connection 23 and second secure communication connection 28 must guarantee authentication, preferably mutual authentication, of the entities terminating the communication connections 23, 28. The authentication can be achieved by means of applying an authentication scheme based, for example, on digital signature primitives that are deemed secure at the time of the connection establishment. In a variant of the embodiment all secure connections, i.e., first and second secure communication connections 23, 28 and the connection between client 25 and certificate authority 24 may be established by relying on Key Encapsulation Mechanisms (KEM), instead of digital signature primitives, e.g., by relying on KEMTLS.

Optionally, the signing device 22 sends a nonce and optionally a signature of the nonce to the state provider device 21 together with the stateReq, see M3. After successful verification of the signature, the nonce will be used to contribute to the generation of the fresh one-time state for the signing device 22. This variant has the advantage that the fresh sHBS private key generation depends on the randomness of both the signing device 22 and the State Provider. This variant could be further extended to include nonces generated from each party that takes part in the transaction. From the example above these parties are the certification authority 24 and/or the client 25. As an additional extension to this variant, all parties involved, and not only the state provider device 21, may optionally including a cryptographic integrity tag or signature of the nonce, to increase the overall security of the transaction.

In a variant of the embodiment the state provider device 21 is equipped with a manufacturer X.509 certificate, issued by a trustworthy certificate authority controlled by the state provider manufacturer, and it can use this manufacturer certificate to sign the state provided in step M4. The certificate authority 24 can then add the state provider signature, together with its manufacturer certificate in an extension of the X.509 certificate to increase the trustworthiness of the issued X.509 certificates.

In a variant of the embodiment the state provider device 21 includes an HMAC in its response to the signing device 22 instead of a digital signature. The variant can be further extended by replacing all digital signatures performed by the parties involved in the transactions with HMACs.

The proposed approach provides protection of both signing service, i.e., the stateful hash-based certification authority 24 and/or firmware signing service and client 25 against re-usage attacks of the one-time signature secret key, like for example a WOTS+ secret key. Under the assumption that sHBS signatures cannot be forged, an attacker must tamper with both the sHBS certification authority or signing service and the state provider device 21. Avoiding one-time signature secret key re-usage is fundamental to guarantee the security of the signature system.

The proposed approach is fully transparent to both the sHSB signing service signing device 22 and client 25. No changes are required to the hardware/software of either the parties. Optionally the client 25 may be enhanced to verify the signature of the state provider device 21 if the certification authority 24 and/or other signing service includes it in its output. The sHBS certification authority 24 and/or signing service and the state provider device 21 can be implemented by different companies and be in different regions.

There is no need for the signing device 22 to implement expensive self-checking mechanisms for the internal state management and one-time signature secret key generation. The security is further guaranteed from the HBS state provider device 21. If the signing device 22, hosting the sHBS private keys, fails to ensure one-time key usage, the state provider device 21 offers a further protection, for example, it may refuse to return a state and/or not sign its response. Further on, state management can be delegated to a third-party which takes responsibility for its secure handling.

It is to be understood that the above description of examples is intended to be illustrative and that the illustrated components are susceptible to various modifications. For example, the illustrated concepts could be applied for different technical systems and especially for different sub-types of the respective technical system with only minor adaptions.

## Claims

1. Signing system (10), comprising
- a signing device (12) comprising a stateful hash-based signature unit (18) for generating a post-quantum proved stateful hash-based signature (HBsig) depending on a unique one-time state, that is renewed after every signature,
- a state provider device (11) which is configured to provide the unique one-time state to the signing device (12), and
wherein the state provider device (11) is located externally from the signing device (12), and wherein the state provider device (11) is operated independently of an operator of the signing device (12).

2. Signing system according to claim 1, wherein the stateful hash-based signature unit (18) is configured to generate the stateful hash-based signature (HBsig) according to a generic stateful Hash-Based Signature sHBS scheme or a stateful signature algorithm according to extended Merkle Signature Scheme XMSS, a multi-tree version of the extended Merkle Signature Scheme XMSS^{MT}, Leighton-Micali Signature LMS scheme, a Hierarchical Signature System HSS and a Pyramid stateful hash-based Signature Scheme.

3. Signing system according to any of the preceding claims, wherein the state provider device (11) is configured to provide audit information about the provided one-time states on regular cycle times.

4. Signing system according to any of the preceding claims, wherein,
the state provider device (11) is configured to receive a request message (REQ) for providing the unique one-time state from the signing device (11), and to send in return a response message (RSP) comprising the unique one-time state and a secure digital signature of the one-time state to the signing device (12).

5. Signing system according to claim 4, wherein the state provider device (11) is configured to use a first digital signature algorithm for establishing the secure digital signature, wherein the first digital signature algorithm is secure over at least two further audit cycle times.

6. Signing system according to any of claim 1-3, wherein
the state provider device (11) is configured to receive a request message (REQ) for providing a unique one-time status from the signing device (12), and to send in return a response message (RSP) comprising the unique one-time status, wherein the request message (REQ) and response message (RSP) are sent using an indirect authentication mechanism that is built with first key encapsulation method KEM primitives.

7. Signing system according to of claim 1-3, wherein
the state provider device (11) is configured to receive a request message (REQ) for providing a unique one-time state from the signing device (11), and to send in return a response message (RSP) comprising the unique one-time state and a hash-based message authentication code HMAC of the response message (RSP) to the signing device (12).

8. Signing system according to claim 4 or 7, wherein the state provider device (11) and the signing device (12) are configured to establish a secure communication connection (13) for transferring the request message (REQ) and the response message (RSP), wherein the secure communication connection (13) is established comprising an authentication of the signing device (11) and the state provider device (12).

9. Signing system according to any of claims 8, wherein the signing device (12) and the state provider device (11) are configured to use a second Key Encapsulation mechanism for establishing the secure communication connection (13).

10. Signing system according to any of the claims 4-9, wherein the signing device (12) is configured to send a nonce with the request message (REQ) for providing a unique one-time state to the state provider device (11) and the state provider device (11) generates the unique one-time state depending on the nonce.

11. Signing system according to claim 4 or 5, wherein the state provider device (11) comprises a certificate of the manufacturer of the state provider device (11), and the state provider device (11) is configured to apply the certificate of the manufacturer to sign the unique one-time state sent in the response message (RSP) to the signing device (12).

12. Computer-implemented method for operating a signing system (10) comprising a signing device (12) and a state provider device (11), in particular configured according to claims 1-11, comprising the method steps of
- providing (S1) a unique one-time state from the state provider device (11) to the signing device (12),
- generating (S2), by the signing device (12), a post-quantum proved stateful hash-based signature (HBsig) depending on a unique one-time state, that has to be renewed after every signature,
wherein the state provider device (11) is located externally from the signing device (12), and wherein the state provider device (11) is operated independently of an operator of the signing device (12).

13. Method according to claim 12, wherein the generated stateful hash-based signature (HBsig) is applied to sign a certificate issued by a certification authority and/or to sign a firmware issued by a firmware provider.

14. Method according to claim 12 or 13, wherein the signing device (12) is registered at the state provider device (11) before the state provider device (11) provides the unique one-time state to the signing device (12).

15. A computer program product directly loadable into an internal memory of at least two digital computers, comprising software code portions for performing the steps of claim 12-14 when said product is run on said digital computers.
